# EUROPEAN PATENT APPLICATION

(11) **EP 3 522 087 A1**
(43) Date of publication of application: **07.08.2019**
(21) Application number: 19305117.4
(22) Date of filing: 31.01.2019
(51) Int. Cl.: G06Q 10/08

(54) **MULTI-SOURCE ADDRESS MANAGEMENT SYSTEMS AND METHODS**

(30) Priority: 31.01.2018 US 201815884973
(71) Applicant: Neopost Technologies, 92220 Bagneux (FR)
(72) Inventor: FAWCETT, Michael, GUILFORD, CT Connecticut 06437 (US); LEGG, Michelle Lea, STRATFORD, CT Connecticut 06614 (US); PLAGNARD, Jean-Mathieu, 38200 VIENNE (FR)
(74) Representative: Cabinet Beau de Loménie

(57) **Abstract**

Systems and methods are provided for enriching a shipping address in a multi-source address management system. In one embodiment, a method enables receiving the shipping address through an interface, validating the shipping address using an address validation service (AVS), validating the validated address through a carrier address validation service of a carrier, and receiving the carrier-validated shipping address from the carrier.

## Description

### BACKGROUND

The evolution of the shipping industry has long reflected the evolution of technology. Steam-engines first helped move goods between and across continents over days and weeks. Then airlines placed delivery to those destinations within a day's reach. The Internet gave birth to e-commerce; and e-commerce delivery now eclipses retail in shipping at overwhelming proportions. Problems relating to shipping delivery, however, have defied the modernization of the shipping industry and persist today.

In today's world, a shipper may initiate a shipping process by accessing a commercial website of a shipping carrier through an online portal, entering relevant shipment information including a destination address and package details, including weight and dimensions, for example, and electronically paying the cost indicated by the carrier to print a shipping label and schedule the shipment of that package. Depending on the carrier and/or the desired arrangement, the shipper may then place the parcel in transit by dropping-off the package or having it picked up at an agreed upon location. A one-time or infrequent shipper may follow this process without the need to save address information. A recurrent or large-volume shipper may follow a similar process by initiating each transaction accessing an online shipping account established with the commercial carrier and using addresses stored in an online address book.

As used herein, the term "package" may refer to a parcel or a package that may be shipped by a commercial shipping service provider including the United States Postal Service (USPS) and other national or international postal service, as well as by a foreign and domestic commercial shipping service provider including, for example, Federal Express®, DHL®, and UPS®, or any other commercial shipping service provider including, for example, Neopost SA and any of its international affiliates or subsidiaries.

### BRIEF SUMMARY

Embodiments of the invention disclosed herein provide methods and systems for enriching a shipping address in a multi-source address management system that includes an interface and an address database. The method include receiving the shipping address through the interface, validating the shipping address using an address validation service (AVS), requesting one or more carriers to validate the validated shipping address; and receiving the carrier-validated shipping address from the one or more carriers. Each validation step of this method progressively enriches the carrier-validated shipping address, and mitigates the risk of a failure in delivery. The method may include pre-processing the shipping address upon input into the interface. The method may include pre-validating the shipping address before validation using the AVS. Pre-validation may include querying the address database to determine whether a shipping address record corresponding to the shipping address is located in the database. Pre-validation may include querying the shipping address record for an address validation timestamp. Pre-validation may include querying the address record to determine whether the address validation time stamp is current. Where an address record includes a current address validation timestamp, the shipping address may be carrier-validated and enrichment may be completed.

The method may include creating a new shipping address record where no prior shipping address record corresponding to the new shipping address may be found in the address book. The method may include sending the new address record may be sent to the AVS for validation to create a new address record in the address book. The AVS may include an AVS database. The method may include sending a new shipping address to the AVS for validation where the shipping address may not be stored or saved in the address book for further use. The method may include sending a shipping address record may be sent to the AVS where an existing address record corresponding to the shipping address may be located and its timestamp may be expired.

The method may include sending a pre-validated address to more than one carrier for carrier-validation following AVS validation. The method may include evaluating an information flag of the shipping address record when carrier-validating the validated shipping address. The information flag may inform of the status of a carrier validation file, a carrier tracking file and/or a carrier. The information flag may represent other enrichments relating to the shipping record. The information flag may identify whether a shipping address is verified, validated and shippable. A true valid information flag may be added to the shipping address record where the address may be identified as verified, validated and shippable using a. A false valid information flag may be added to the shipping address record where the shipping address may not be verified, validated and shippable.

The method may include, in carrier validation, updating the shipping address record with one or both of the true and the false valid flags. The method may include updating the status of the information flag based upon information derived from the carrier validation, the carrier invoice, the carrier tracking file and/or other enrichments. The method may include, in carrier validation, updating the shipping address record based upon the information derived from the carrier validation, the carrier invoice, and the carrier tracking file and/or other enrichments.

The method may include saving carrier-validated shipping addresses may sequentially or in parallel. The method may include storing carrier-validated shipping addresses in an address record on the address database or on the AVS database. The method may include storing carrier-validated shipping addresses on an entry-by-entry basis or cumulatively. The method may include displaying carrier-validation results through the interface. The method may include displaying carrier-validation results through the interface selectively or comprehensively.

The method may include storing on a single shipping address record carrier-validations provided by every carrier in communication with the multi-source address management system of the present invention. The method may include storing an address history on each shipping address record. The method may include sharing carrier-validated shipping address information among carriers in communication with the multi-source address management system of the present invention.

According to one embodiment of the disclosed subject matter, a system may be provided for enriching a shipping address using a shipping service provider computer system. The system may include an address database. The system may include an interface. The interface may be accessible by a device over a network. The interface may be used for inputting the shipping address. The system may be used to receive a shipping address and/or shipping data related input. The system may include a computerized software application platform for receive the shipping address and/or shipping data related input from the interface or other sources including an enterprise resource management (ERP) system. The software application platform may include a database for storing enriched shipping addresses. The system may include an address validation service (AVS) for validating the shipping address record.

According to this one embodiment, the AVS may be accessible over the network by the computerized application platform. The AVS may include a database for storing validated shipping addresses. The system may include one or more carriers. The one or more carriers may be accessible over the network by the computerized application platform and/or the AVS. The carriers may carrier-validate pre-validated shipping addresses from the computerized application platform. The carriers may carrier-validate validated shipping address from the AVS. The carriers may communicate to the computerized application platform carrier-validated shipping addresses for storage in the address database.

According to another embodiment of the disclosed subject matter, a multi-source address management system is provided where a computer-readable medium may store a plurality of instructions which, when executed by a processor, may perform a method for enriching a shipping address using the system. The system may include a computerized application platform, an interface and an address database. The method may include the platform receiving the shipping address through the interface over a network. The method may include an address validation service (AVS) for validating the shipping address. The AVS may be accessible over the computer network and may include an AVS database. The method may include the AVS may receiving the shipping address from the computerized platform. The AVS may include a database. The method may include the AVS communicating a request over the network to one or more carriers to at least validate the validated shipping address. The method may include the carrier-validating of the validated shipping addresses by the one or more carriers. The method may include the one or more carriers communicating over the network to the computerized platform database the one or more carrier-validated shipping addresses for saving and storage in the address database.

Additional features, advantages, and embodiments of the disclosed subject matter may be set forth or apparent from consideration of the following detailed description, drawings and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate embodiments of the disclosed subject matter and together with the detailed description serve to explain the principles of embodiments of the disclosed subject matter. No attempt is made to show structural details in more detail than may be necessary for a fundamental understanding of the disclosed subject matter and various ways in which it may be practiced.
FIG. 1 illustrates an exemplary distributed computer system suitable for implementation of embodiments of the invention.
FIG. 2 illustrates another exemplary distributed computer system suitable for implementation of embodiments of the invention.
FIG. 3 illustrates an exemplary process according to an embodiment of the invention.
FIG. 4 illustrates another exemplary process according to an embodiment of the invention.
FIG. 5 illustrates an exemplary main shipping screen interface for entry of shipping information according to an embodiment of the invention.
FIG. 6 shows an expanded view of the "Ship To" field shown in the exemplary interface of FIG. 5.
FIG. 7 illustrates an exemplary address book screen according to an embodiment of the invention.
FIG. 8 illustrates an exemplary interface for entry of a shipping address according to an embodiment of the invention.
FIG. 9 illustrates an exemplary data structure for creating a new address record according to an embodiment of the invention.
FIG. 10 illustrates an exemplary screen providing address verification results according to an embodiment of the invention.
FIG. 11 illustrates an exemplary pre-carrier validation data structure of a new address record according to an embodiment of the invention.
FIG. 12 illustrates an exemplary post-carrier validation data structure of a new address record according to an embodiment of the invention.

### DETAILED DESCRIPTION

Today, according to conventional processes, entry of a destination address when providing shipping information may invoke an evaluation of that address as a pre-condition to processing a shipment request. Where a recognized destination address may be provided, and the address may be accepted, the request may be processed and the package may be accepted for shipment. Where an unrecognized destination address may be provided, the address may be rejected, and the shipment request may be declined.

Recognition of a destination address and successful processing of a shipment request, however, does not always guarantee delivery of a package shipment. The destination address may no longer exist. The destination address may exist, but may be the wrong address for the addressee. The destination address may exist by may not be an address to which a selected carrier will deliver the package. That address also may exist but additional fees may require pre-payment before a selected carrier may complete delivery of the shipment. Conventionally, moreover, a carrier will not refund to a shipper any fees paid in the event of an unsuccessful delivery attempt, regardless whether for any these or other reasons.

As previously disclosed, a package may be accepted for shipment by a carrier where a recognized destination address is provided. However, recognition by a carrier of a destination address and the acceptance of that package for shipment, does not guarantee successful delivery of the package. An accepted address may no longer exist. An accepted address may exist, but may not be the correct address for the addressee. The address may exist by may not be an address to which a selected carrier will actually deliver the package. That address also may exist but additional fees may require pre-payment before a selected carrier will complete the shipment.

In these circumstances, a shipper may only learn of a failure of a package delivery after a carrier has attempted delivery. In those instances, the package may or may not be returned by the carrier to the shipper. The package may be lost or damaged. The value of a shipment or its sheer volume may be too cost prohibitive to permit return. The delivery may no longer be in time, if it was time sensitive. The carrier may not provide package return as a matter of policy. Moreover, any costs paid to a carrier for delivery may not be recoverable, as the carrier may argue that delivery was attempted (and the cost was incurred) regardless of success. Ultimately, then, carrier acceptance and perceived address accuracy does not preclude a failure in package delivery.

Traditionally, the USPS is and has been at the forefront to offer solutions to help mitigate the risk of shipments made to incorrect or improper addresses. The USPS, for example, offers online databases for shippers to standardize addresses ("Address Element Correction (AECII®)") and validate addresses according to a standardized format ("DSF2®") as part of its AMS ("Address Matching System"), which is available on CD/DVD-ROM or through APIs (Application Programming Interfaces). Shipping service providers have procured Patents that call for copies of one or more of the USPS address databases to be imported systems to provide correct shipment addresses. See, e.g., U.S. Pat. No. 7,743,043 for ADDRESS MATCHING SYSTEM AND METHOD, issued on June 22, 2010; and U.S. Pat. No. 7,236,970 for ADDRESS MATCHING SYSTEM AND METHOD, issued on June 26, 2007. Other third service providers, such as UPS, for example, offer access to USPS CASS ("Coding Accuracy Support System") certification for verifying addresses against the USPS AMS. See, e.g., https://www.ups.com/us/en/help-center/sri/ship-box/page . However, none of these solutions solve the problem of failure in delivery where a shipping address is wrong, inaccurate or incomplete. By all relying upon a common database (that of the USPS), in fact, these solutions tend to perpetuate these problems.

Accordingly, there is a need for a system and a method for enriching a shipping address in a multi-source address management system that may enhance a shipper's ability to more accurately and reliably address a package to a destination. As used herein, a shipping address is "enriched" when it is made more accurate or reliable due to a verification of, correction of, or addition to, information in the shipping address. For example, updating a shipping address with a new ZIP code, or replacing a ZIP code with a more precise ZIP+4 code will "enrich" the shipping address as used herein. A shipping address may be considered "enriched" if it has been verified as accurate by a shipper, a validation service, or the like, even though the information in the shipping address has not been changed. For example, an address may be provided to an address validation service as disclosed herein, which may provide verification that the address is complete and correct. The combination of the shipping address and evidence of validation (such as a flag indicating that the address is valid) may be considered an "enriched" shipping address, although the actual shipping information (name, address, etc.) is not changed during the validation process. Generally, an address that is more accurate or includes more additional data that is of use to a shipper may be referred to as "more enriched" than an address that is less accurate or that lacks such additional data. For example, an address that includes indicators that it has been validated by multiple validation services may be considered "more enriched" than one that has not been validated but is believed to be accurate, or one that has been validated by fewer validating entities. An address may be enriched by including geolocation information and/or carrier/delivery notes. As used herein, geolocation information is information that may identify or estimate a real-world geographic location such as, for example, by its geographic coordinates. As used herein, moreover, carrier/delivery notes may include notes to a carrier about a delivery address and/or a delivery being made such as, for example, the day(s) that a carrier may deliver to an address, the day(s) in which a shipment will/will not be accepted and/or other carrier inclusions/exclusions.

There is a need for a system and a method for enriching a shipping address in a multi-source address management system that may enhance the accuracy of the address records maintained by a shipping service provider and/or a carrier.

There is a need for a system and a method for enriching a shipping address in a multi-source address management system that may enhance the level of service offered to a shipper by a shipping service provider and/or a carrier.

There is a need for a system and a method for enriching a shipping address in a multi-source address management system that may enhance the data quality of shipping records in a shipping service provider and/or a carrier address database.

There is a need for a system and a method for enriching a shipping address in a multi-source address management system that may enhance the data quality of the address database and level of service offered by an address verification service.

There is a need for a system and a method for enriching a shipping address in a multi-source address management system that may enhance the reliability of carrier address validations.

There is a need for a system and a method for enriching a shipping address in a multi-source address management system that may enable a shipper more intelligently select a shipping service provider from among a group of service providers

There is a need for a system and a method for enriching a shipping address in a multi-source address management system that may enable a shipper more reliably select a carrier from among a group of carriers.

There is a need for a system and a method for enriching a shipping address in a multi-source address management system that may enable for a shipper greater visibility to a broad of carriers available to perform a selected service for a shipper.

There is a need for a system and a method for enriching a shipping address in a multi-source address management system that may enable receiving the shipping address through a system interface, validating the shipping address using an address validation service and/or validating the validated address through a carrier, and receiving the carrier validated shipping address from the carrier.

There is a need for a system and a method for enriching a shipping address in a multi-source address management system that may enable multiple validations of a shipping address using intermediary and carrier databases.

There is a need for a system and a method for enriching a shipping address in a multi-source address management system that may enable integration of shipping address information from different sources into a single address record.

There is a need for a system and a method for enriching a shipping address in a multi-source address management system that may enable identification of every carrier and an indication of whether every carrier may ship to a designated shipping address.

There is a need for a system and a method for enriching a shipping address in a multi-source address management system that may enable updating of an address record using data from one or more of a carrier validation, a carrier invoice and a carrier tracking file.

The systems and techniques disclosed herein may address these needs, and may provide solutions to other shortcomings and problems existing in current technologies.

Accordingly, embodiments of the present invention provide significant benefits over conventional techniques and systems for creating and validating shipping addresses. For example, embodiments disclosed herein may allow for more efficient processing of physical mailpieces with reduced human oversight, by automatically validating shipping addresses with multiple computerized databases. Such validation would not be possible without the computerized systems and techniques disclosed herein, resulting in the shipping errors previously described.

Embodiments disclosed herein may allow for improving identification of which carrier(s) may be available or more suitable to deliver a shipment such that, when a carrier rate comparison or carrier selection is made, the display will only identify appropriate carriers. Statistically, a one percent reduction in error carrier selection and/or delivery will reduce cost and increase operational efficiency. Such improvements would not be possible without the computerized systems and techniques disclosed herein.

Embodiments disclosed herein also may allow for using identifiers when storing enriched addresses/address data that will enable shippers to benefit where other shippers have already validated those addresses or that data. Use of the identifiers similarly may reduce required storage space and the complexity of the data stored in an address database. Such improvements in efficiency and reductions in required operational resources would not be possible without the computerized systems and techniques disclosed herein.

Moreover, embodiments disclosed herein may enable integration of address data from otherwise disparate resources to enrich the data, such as by augmenting and/or correcting it, and enable the storage of that data on a single record in common database such as, for example, where carrier address updates provided on carrier invoices may be derived from the invoices and integrated into and stored in a shipping address record stored on a shipping address database. Such improvements in information integration and data enrichments would not be possible without the computerized systems and techniques disclosed herein.

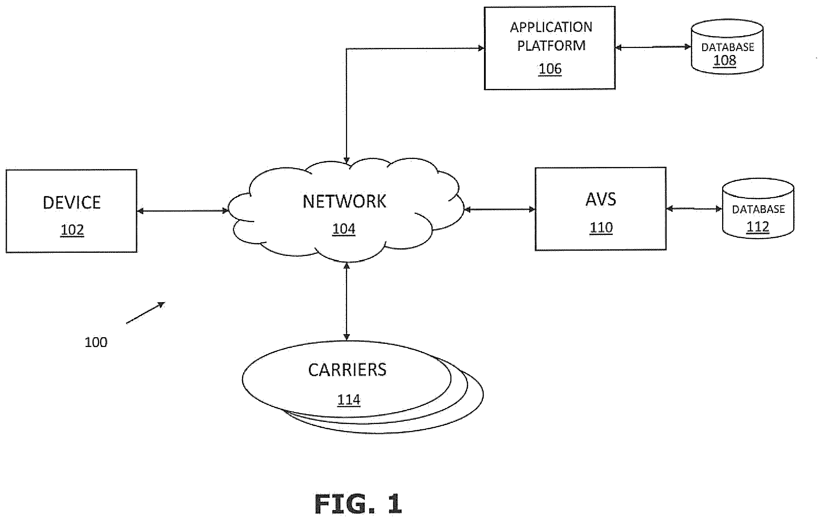

FIG. 1 illustrates an example network arrangement 100 according to an embodiment of the disclosed subject matter. One or more devices 102, such as local computers, smart phones, tablet computing devices, and the like, may connect via one or more networks 104. The network 104 may be a local network, a wide area network, the Internet, or any suitable communication network or networks, and may be implemented on any suitable platform including wired and/or wireless networks. The devices 102 may communicate with one or more remote devices. The remote devices may be directly accessible by the devices 102, or one or more other devices may provide intermediary access. The devices 102 also may access other remote platforms or services provided by remote platforms such as cloud computing arrangements and services.

Computerized software application platform 106 may connect via the network 104. Application platform 106 may include one or more servers (not shown) and/or databases 108, as will be readily understood by one of skill in the art. Database 108 may be integral with application platform 106 or may be separate and accessed through other interfaces. Database 108 may include a series of files in a file system or in memory. Database 108 may exist in volatile or non-volatile memory. Database 108 may be secure. Database 108 may include an address book database. Database 108 may be an address book database.

Application platform 106 may communicate directly with, or be integral with one or more web services, such as an address verification service (AVS) 110 and/or one or more carrier 114, such as where one or more of these components are implemented on a common computer system. Address verification service 110 may include an AVS database 112. The AVS 110 may be a third-party service. Application platform 106, AVS 110 and/or carriers 114 may be remote from the device 11, or one or more may be local, such as where a user accesses a locally-installed web service that includes an AVS 110 or an equivalent service.

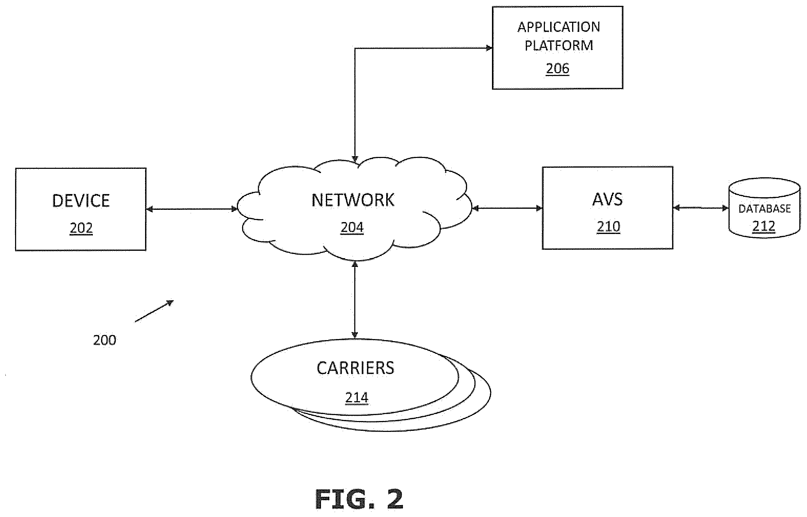

FIG. 2 illustrates another example network arrangement 200 according to an embodiment of the disclosed subject matter where computerized software application platform 206 may communicate with and access address data stored on AVS database 212 through network 204. Network arrangement 200 may enable use of a unique identifier (ID) corresponding to a shipping address and/or shipping address record and the storage of the shipping address/shipping address record on the AVS using the unique ID. Arrangement 200 may enable retrieval and updating of the shipping address record using the unique ID to enhance and carrier-validate the shipping address for use according to the methods disclosed herein. Use of the unique ID may reduce the need to store and/or recall the shipping address and/or address record for use and, thus, reduce required storage space and/or data complexity. Use of the unique ID may also enhance or broaden the availability and/or accessibility of the address/address record information.

Other devices or components (not shown) may be included in the example network arrangements shown in FIGS. 1 and 2 (e.g., document scanners, digital cameras and so on) and connected in manners described and as known to those skilled in the art. Components can be interconnected in different ways from that shown. The operation of devices 102 such as those identified and/or described herein is readily known in the art and is not discussed in detail in this application. Code to implement the present disclosure can be stored in computer-readable storage media such as one or more of the memory, fixed storage, removable media, or on a remote storage location (all not shown).

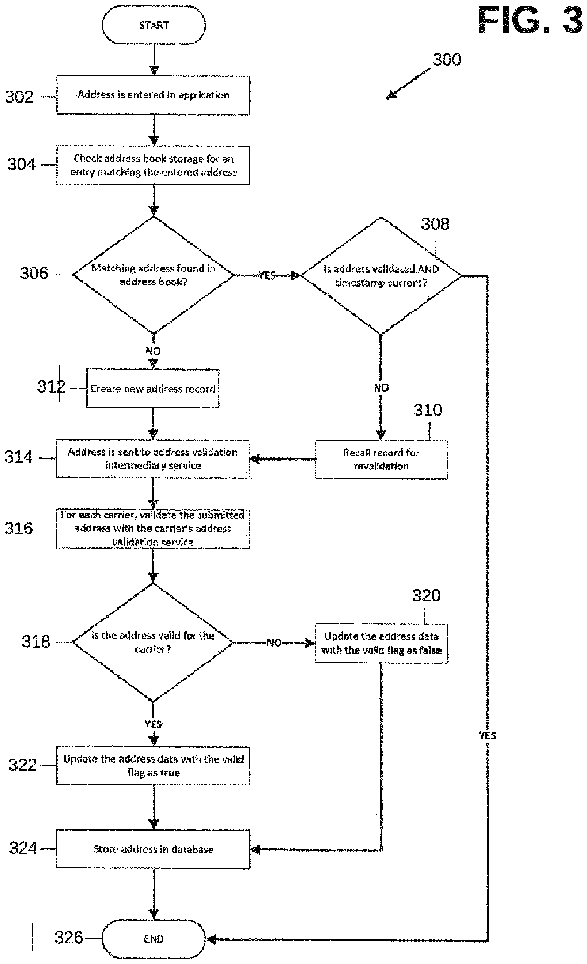

Methods 300 for enriching a shipping address on a computerized software application platform 106, such as a multi-source address management system, as disclosed herein, are shown in FIG. 3. The methods for enriching a shipping address using a multi-source address management system according to embodiments of the disclosed subject matter may include receiving a shipping address through an interface 102, validating the shipping address using an address validation service (AVS) 110, validating the shipping address through a carrier 114 and receiving the carrier-validated shipping address from the carrier 114. According to the disclosed subject matter, the shipping address may be progressively enriched by each validation step completed by the method.

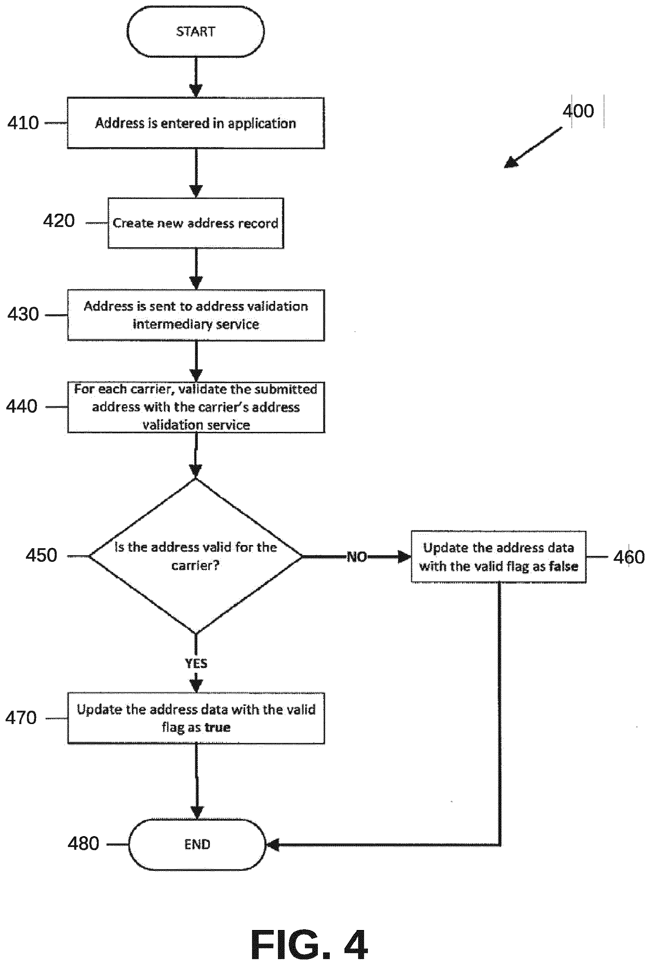

Method 300 may be performed to create a new enriched address record for storage in database 108 of system 106 and/or or AVS database 112. Method 300 may be performed to send/ship to an address that already exists in database 106, 108. Method 300 may be performed to edit or update and enrich an existing address in database 106,108. Method 400, shown in FIG. 4, substantially corresponds with aspects of method 300, and may be performed to ship to a new address that may only be used once and may not be stored in database 106,108. As will be appreciate by those skilled in the art, accordingly, methods 300 and 400 differ only in pre-validation, for example, including address matching, and validated address storage.

Method 300 may begin at 302 when a shipping address is input through an interface. The interface may be a user interface such may be accessible on device 102. The interface may be a service interface, such as may be used in connection with an enterprise resource planning (ERP) system or similar software package that facilitates back room operations in an organization. A service interface may derive a shipping address/address-related information from a carrier invoice or a carrier tracking file. A carrier invoice and/or carrier tracking file may be accessible to provide other relevant and useful information as well. Address-related and/or useful information may include "additional enrichments" such as, for example, address geolocation information and/or carrier/delivery notes as described herein.

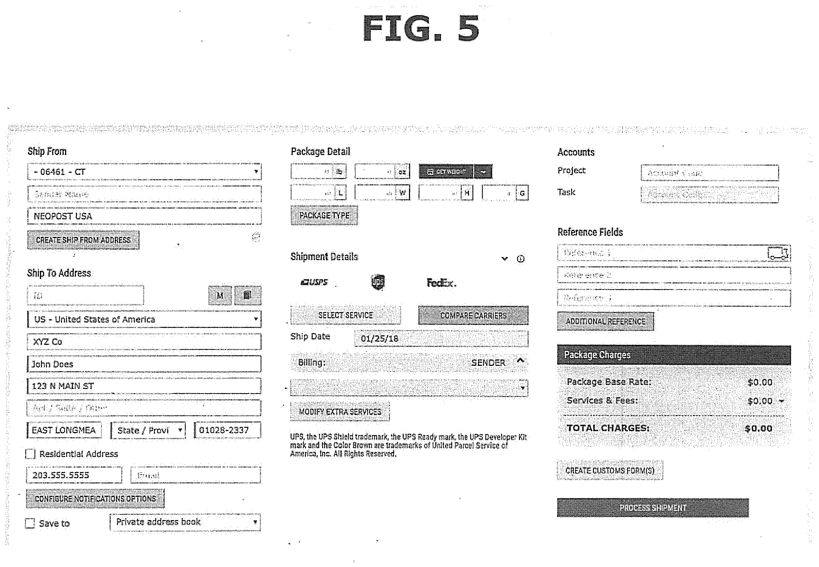

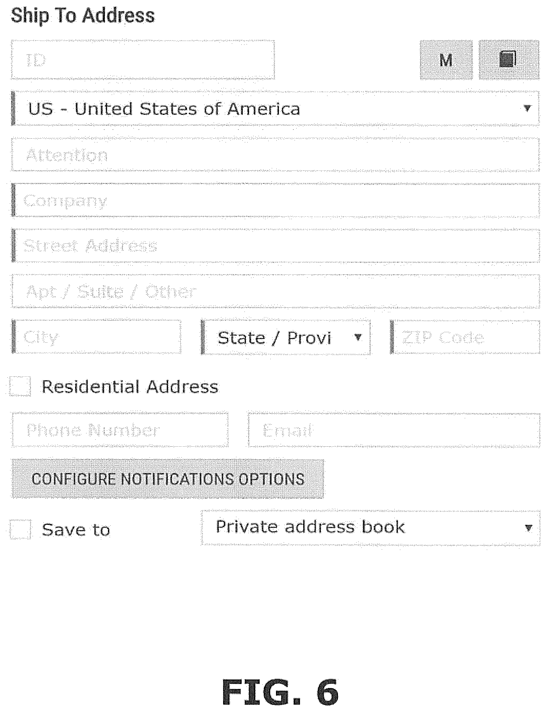

FIG. 5 illustrates an example main shipping screen interface that may be accessed using a device 102 interface. The main shipping screen interface may be used for address entry of a new shipping address and a one-time shipment address according to an embodiment of the disclosed subject matter. FIG. 6 illustrates an expanded view of the "Ship To" field of the main shipping screen interface of FIG. 5. FIGS. 5 and 6 illustrate shipping screens that may enable manual entry of a shipping address.

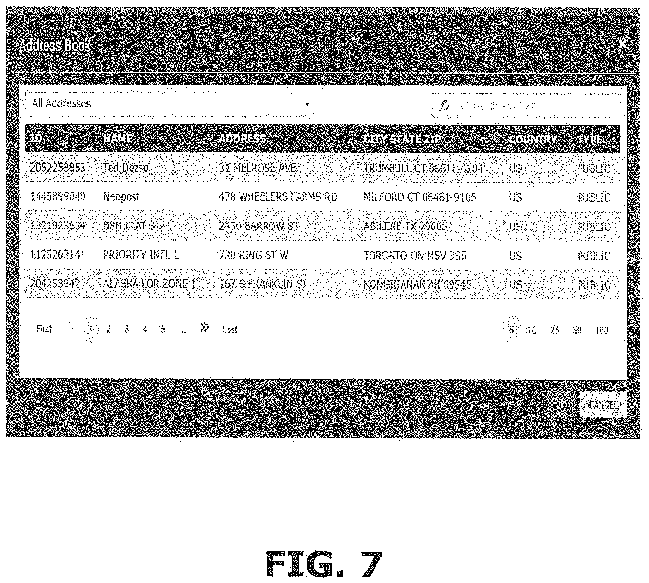

FIG. 7 illustrates an address book screen according to an embodiment of the disclosed subject matter. The address book screen of FIG. 7 may enable addresses stored in the address book to be recalled and used for shipping.

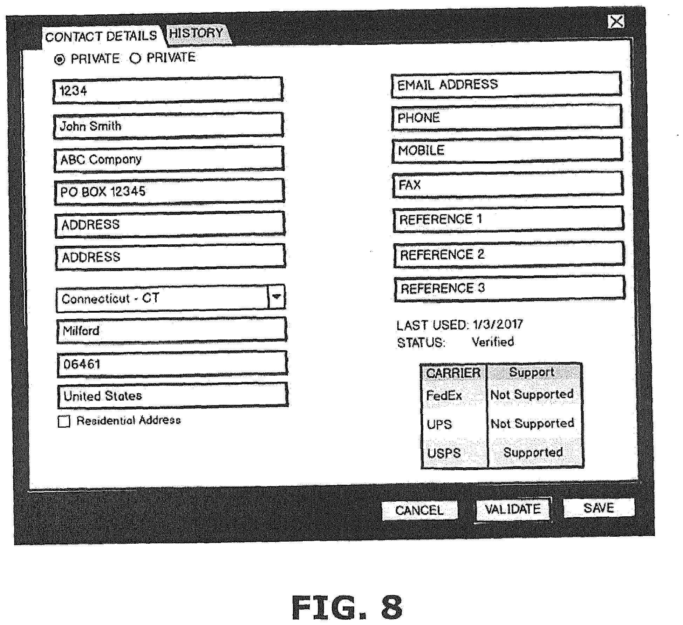

FIG. 8 illustrates an example screen that may be accessed to enable address book management of stored addresses. The screen of FIG. 8 may enable editing and/or adding an address to the address book according to an embodiment of the disclosed subject matter. Information displayed in a screen display such as that shown in FIG. 8 may be compiled or populated using information derived, for example, from a carrier tracking file or carrier invoice. According to the embodiments of the disclosed subject matter, shipping addresses may be input or imported singularly, such as manually, or in bulk or other comparable form, such as by importing an address list.

The shipping address may be pre-processed upon input at 302. Pre-processing may include field validation of the shipping address. Field validation may be performed to ensure that information is entered into each of the address "Ship To" fields, and that all of the information input into the address fields is correct before any further processing occurs using the shipping address. Field validation may be perform on a box-by-box basis on each box in the "Ship-To" field on the main shipping screen.

Pre-processing may include form validation of the shipping address. Form validation may performed to ensure that each element of shipping address information input into each "ship to" field on the shipping screen interface is properly associated with each other element of the address input. Form validation may ensure, for example, that a shipping address zip code matches the city destination input and that the city input matches the destination state input. Form validation, for example, may be of particular import in enriching international shipment addresses where such addresses may include, for example, street address and/or postal code information that may be more widely varied in content and/or may require additional information to be shipment compliant such as, for example, where a telephone numbers, is required to complete shipment.

The shipping address may be pre-validated at 306 according to an embodiment of the disclosed subject matter. Pre-validating may begin may include querying the shipping address book for the existence of a shipping address record in the address book database 108 that corresponds with or matches the shipping address received through the interface.

Database 108 may be closely associated with application platform 106. Database 108 may be remote to the system. Database 108 may be closely associated, for example, with an external service such as the AVS 110 and/or the AVS database 112.

In pre-validation, query 306 may return an affirmative, or "YES" response confirming the existence of an address in the address book corresponding to the shipping address.

Where query 306 returns an affirmative response, query 308 may be made to the address record in the address book to determine whether the address record contains an address validation timestamp and if the timestamp is current, or timely, or valid. While it may be understood that a carrier validation date may be explored to determine the timeliness of a shipping address, as well, carrier validation may be unnecessary to evaluate the timeliness of the shipping address where such validation may not exist in the absence of a timestamp.

Where evaluation of carrier validation status may be desired as an additional or sole determinant address record validity, it may be further understood that carrier validation status may be assessed by consideration of AVS records alone and/or AVS records in combination with carrier records.

The validity period of a timestamp may be determined based on federal regulation, such as, for example, based on use of USPS zone and address charts. The timestamp validity period may be determined based on the requirements of one or more carrier requirement, such as, for example, those established by UPS or FedEx. The timestamp validity period may be determined by the average time period requirement of a group of carriers. The timestamp validity period also may be determined by service providers providing shipping address enriching services.

Where an address validation timestamp inquiry date may precede the timestamp validation date, query 308 may return an affirmative, or "YES", response and the timestamp date may be deemed current, or timely, or valid, and the shipping address on the address record may be deemed validated. Upon this determination, method 300 may end at 328.

Where an address validation timestamp inquiry date may postdate the timestamp validation date, query 308 may return a negative, or "NO", response and the timestamp date may be deemed expired, untimely, or invalid. Upon this determination, the shipping address record may be recalled for revalidation at 310.

Also in pre-validation, query 306 may return a negative, or "NO", response, indicating that no address record containing the shipping address may be located and, at 312 a new address record may be created in memory containing the new address.

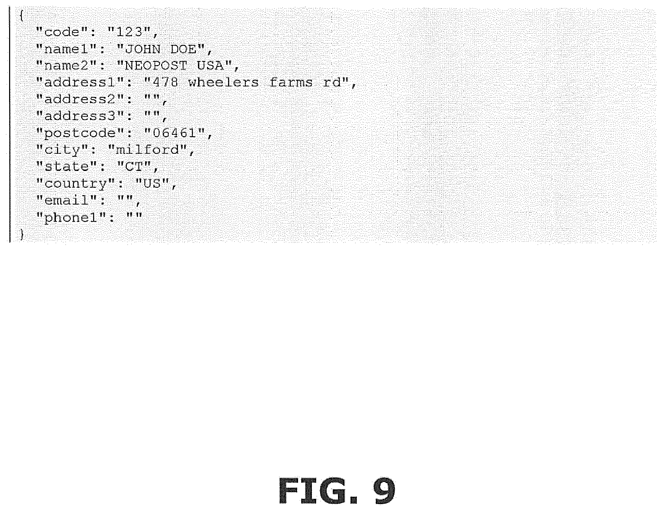

FIG 9 illustrates one example of data structure representing a shipping address that may be sent to an AVS 110 according to one embodiment of the disclosed subject matter. Information illustrated in FIG. 8 may be used to create a data structure such as shown in FIG. 9. It may be considered the input or the request that may be sent to the AVS. It may represent one of the first steps to create a new address record.

The address record may include any combination of information. The minimum information that may be required is the address itself. However, other information also may be included as well. In some circumstances, for example, security information including credential keys and passwords may be included in an address record.

According to one embodiment of the disclosed subject matter, one shipping address record may be created for each carrier that may deliver to a shipping address. According to another embodiment, one address record may be created for one shipping address and information for every carrier that may deliver to that shipping address may be aggregated on the one address record. A shipping history also may be included on the one address record.

According to one embodiment of the disclosed subject matter, where a new shipping address may be input into the multi-source address management system 100, and no indication may be provided that the shipping address may be stored in the address book, such as, for example, by checking the box shown on the main shipping screen interface of FIG. 5, the address may not be stored and may be discarded following use.

According to another embodiment, under the same circumstances, the new shipping address may be saved, such as, for example, in an AVS database 112, or an address cache, as, once validated, the shipping address may be easier or less time-consuming to recall from a database or cache than it may be to revalidate it or to search across multiple carrier databases to locate that address once more.

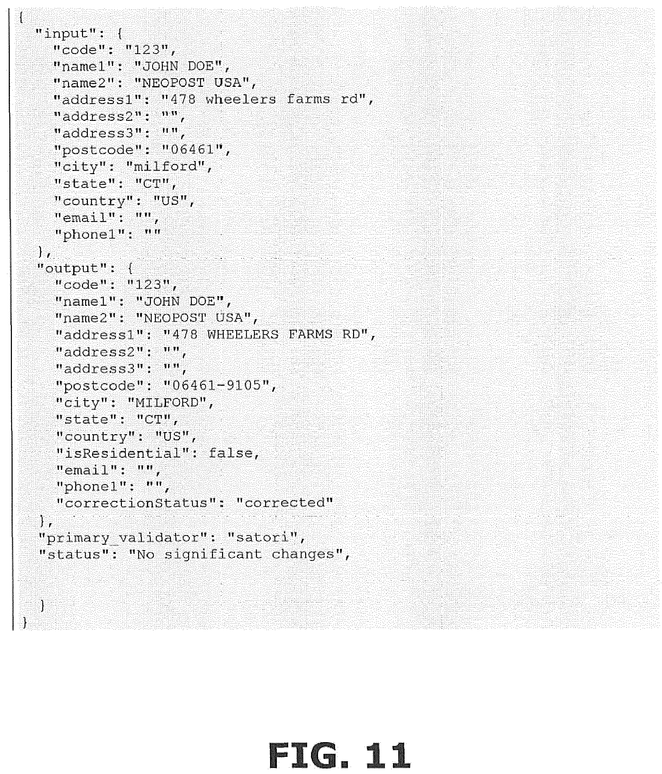

At step 314, the new shipping address and/or the recalled address may be communicated to the AVS 110 for validation/revalidation as needed, respectively. As disclosed above, according to one embodiment of the disclosed subject matter, once validated, the AVS validated shipping address may be communicated to a carrier 114 for carrier validation. FIG. 11 illustrates an example of an AVS validation address output that may be communicated for carrier validation.

As may be understood by comparing the methods shown in FIGS. 3 and 4, a shipping address that is intended for a one-time use or that will not be stored in the address book of the multi-source system may not require pre-validation as that address has not previously been used and there may be no prior address book entry nor any timestamp corresponding to that address in the system. Accordingly, as illustrated in FIG. 4, following input through the interface at 410, the address may be processed in a manner according to one embodiment of the disclosed subject matter, where it may be AVS validated in a manner similar to a new shipping address to be saved or a shipping address already existing in the address book.

A validated shipping address may be communicated from the AVS 110 to a carrier 114 one at a time. A validated shipping address may be communicated in a group or in volume. A shipping address enriched may be communicated directly to a carrier 114 from the system interface for carrier validation.

Carrier validation may begin at step 316 in method 300. According to one embodiment of the disclosed subject matter, carrier validation may be performed using a carrier address validation service (AVS). In carrier validation, at step 320, a carrier may query a carrier AVS, using the validated shipping address, to at least carrier-validate the validated shipping address. A carrier may query the carrier AVS using one validated shipping address at a time. A carrier may query the carrier AVS using multiple validated shipping addresses at one time. A carrier may query the carrier AVS to determine if the validated shipping address is timestamp valid. A carrier may query the carrier AVS to determine if the validated shipping address is shippable; that is, if it an address to which it delivers. One or more carriers may make one or more of these determinations in sequence. Such carriers also may make these determinations simultaneously. Each of the carriers may report carrier-validations of the validated addresses independently. The carrier-validations of the validated addresses may be reported sequentially, or may be aggregated.

Carrier validations may include or comprise correction records indicating one or more errors in a shipping address. Correction records may be returned individually per address record. Correction records may be aggregated per address record. A validation or correction record may be stored and include a carrier specific shipping address format. A validation or correction record may be stored and may include additional fields that may be completely or selectively incorporated into shipping records.

According to one embodiment of the disclosed subject matter, carrier format preferences may be locally stored in database 106 on a per address record basis. Carrier format preferences may be centrally stored in a global address system and be available to any shipper desiring to ship using that carrier. Identifiers (IDs) may be used in the global address system to facilitate storage of and access to address records such that carriers and/or service providers may use the IDs in lieu of storing shipping addresses in an address book for ease of use, reduction of storage and/or to avoid having to validate an address multiple times.

At 320, a query is made to the carrier's AVS to assess whether the validated address may be carrier-validated. According to one embodiment of the disclosed subject matter, an information flag may be used in the shipping address record to indicate and/or update the status of that address based upon the carrier validation result.

A "true" information flag, or a "true" valid flag, or a "true" flag, may be placed in a shipping address record where an address is carrier validated. A "false" information flag, or a "false" valid flag, or a "false" flag, may be entered where the shipping address may not be carrier validated.

According to this embodiment, more particularly, a "true" flag may be provided where a carrier validation inquiry may identify the shipping address to be "verified, validated and shippable." A "false" flag may be provided where a carrier validation inquiry may identify the shipping address to be not "verified, validated and shippable." A "false" flag also may be used where a system error precludes determination of any one or more of whether the shipping address is "verified, validated and shippable." A system error may be indicated where a shipping address database is unavailable. According to this embodiment further, all three criteria must be met in order for entry a "true" flag.

According to this embodiment, verification of the shipping address may be provided where that address may be confirmed to belong to the addressee. Validation of the address, as described herein, may be provided where existence of the address may be confirmed by a carrier's AVS within the validation timestamp period. An address may be shippable, moreover, where the carrier may ship to that address.

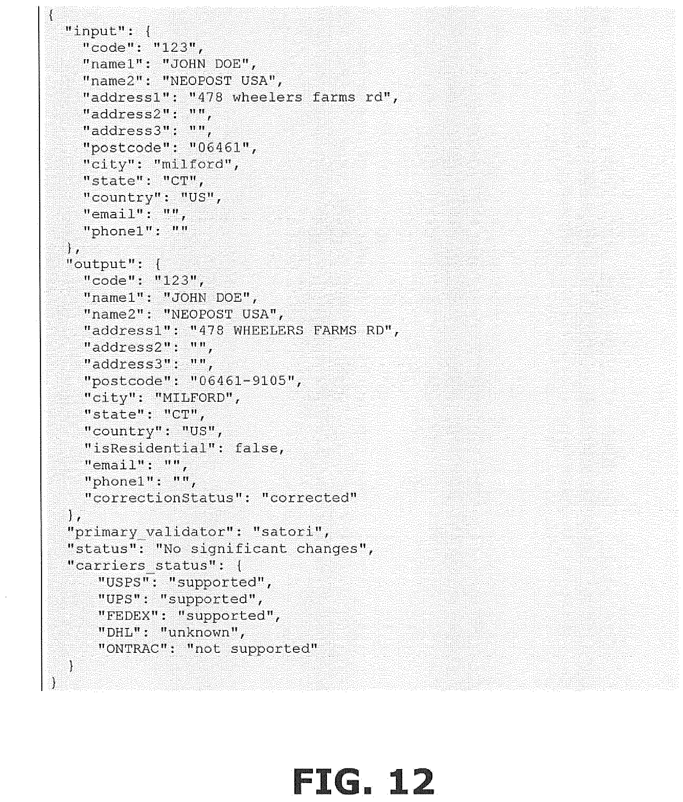

FIG. 12 shows the data object output a carrier validation request using multiple carriers according to one embodiment of the disclosed subject matter. This output illustrates that carrier address validation results also may be indicated by identifying a carrier's status is "supported", "unsupported" or "unknown" - "supported" status may indicate that a shipping address may be deemed "validated, shippable and ratable", "unsupported" where a shipping address may be "validated, shippable and ratable" and "unknown" may signify that the status of one or more of the "validated, shippable and ratable" may not be determined. The meaning of the terms "validated" and "shippable" herein correspond with the meaning of these same terms as discussed above. As used herein, a shipping address may be "ratable" where the cost of shipment to that address may be determined.

According to an embodiment of the disclosed subject matter, other information enrichments may be provided in addition and/or in conjunction with the flag or equivalent indicators returned in response to a carrier validation request. The flag or equivalent indicators may be the minimum information provided in the response. As discussed above, additional information may be collected and provided from, for example, carrier invoices and/or carrier tracking files. The additional information or enrichments may be included and show in the data structure of FIG. 12.

According to this embodiment, where backend processes such as carrier invoices and carrier tracking fields may serve as data sources for a flag, backend processes may retrieve information, for example, from an invoice when the invoice arrives from a carrier and, based on the information provided, may change the status of the flag.

In a multi-carrier environment, where an invoice may show a delivery was attempted and unsuccessful for one carrier, for example, a valid flag for a particular shipping address may be updated to false. Similarly, a false flag may be updated to true where an address shown as false by one carrier was later proven to be a deliverable address by another carrier. In either of the above circumstances, moreover, the more recent address information furnished by the invoice also may be used to update the address itself in the address record.

According to an embodiment of the disclosed subject matter, one or more of the status of an information flag and a shipping address record may be updated and/or changed based upon information derived from one or more of a carrier validation file, a carrier invoice file and a carrier tracking file.

At 320, the carrier validation query response is in the affirmative, or a "YES" response is returned, the address data in the address record is updated with a valid flag as "true", and an entry may be found in the carrier address database that matches the validated shipping address.

At 322, the carrier validation query response is in the negative, or a "NO" response is returned, the address data in the address record is updated with a valid flag as "false", and an entry may not be found in the carrier address database that matches the validated shipping address.

According to one embodiment of the disclosed subject matter the carrier validation of the validated shipping address may be saved. A shipping history for the shipping address may be saved. The carrier validation may be saved on the shipping address record in database 108 or in AVS database 112, or both. Enrichment information as described herein may be saved on the address record in database 106 or in AVS database 110, or both. Where a shipping address is carrier-validated by more than one carrier at a time, the carrier validation for each carrier may be saved one record at a time, in aggregate, or in parallel.

At 324, the carrier validation of the validated shipping address may be stored in the address record in the database. Additional information derived during the carrier validation process may be stored as well. A shipping history for the shipping address may be stored. The carrier validation may be stored on the shipping address record in database 108, in AVS database 112, or both. Enrichment information may be stored on the address record in database 106 or in AVS database 110, or both. Where a shipping address is carrier-validated by more than one carrier at a time, the carrier validation for each carrier may be stored one record at a time, in aggregate, or in parallel as well.

The carrier-validated shipping address may be displayed through the interface. Where a shipping address is carrier-validated by more than one carrier at a time, the carrier-validated shipping address may be displayed one at a time, selectively, or in the aggregate, as illustrated in output of FIG. 12 The carrier-validated shipping address may be stored in the address book. The carrier-validated shipping address stored in the address book may be displayed to the user. Where a shipping address is carrier-validated by more than one carrier at a time, carrier validations of the shipping address may be selectively displayed to the user displayed one at a time, or displayed in the aggregate, as shown in FIG. 8.

According to an embodiment of the disclosed subject matter, where carrier validation of a shipping address is performed for one carrier the results of that carrier's validation may be communicated to other carriers in communication with the multi-source address management system.

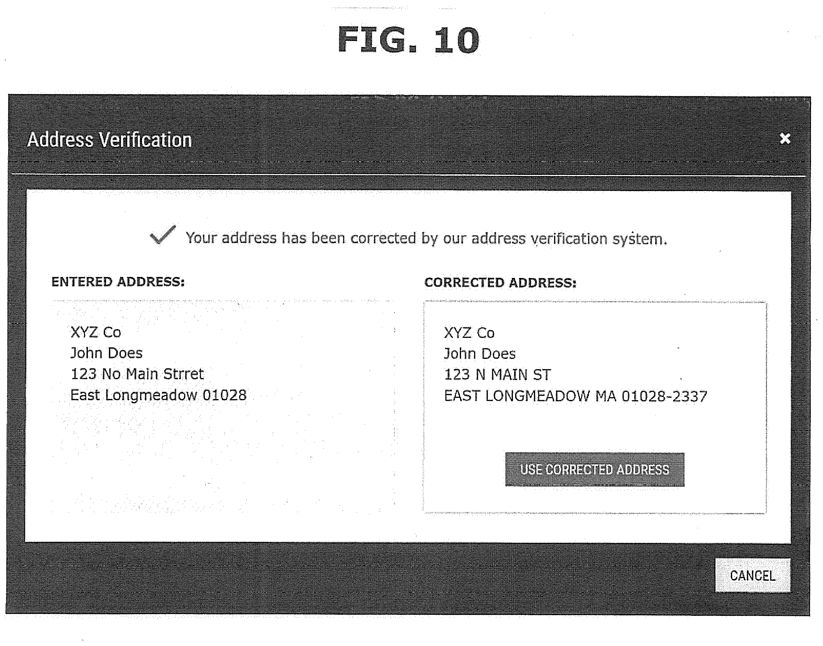

At 326, the method for enriching a shipping address using the multi-source address management system of the present invention may end. FIG. 10 illustrates one embodiment of the disclosed subject matter displaying the results of the address enrichment process. The display may appear independently on a screen of the interface. The display may appear on an interface screen superimposed a main shipping screen display as shown in FIG. 5. The display may provide a user with an opportunity to select a recommended format for the shipping address (as shown on the left in FIG. 10) or to continue with the inputted shipping address (shown on the right). FIG. 12 illustrates one data structure following completion of every iteration of carrier validation. Data structure of FIG. 12 may also display additional enrichment results where such results are sought or provided.

At 326, and as shown in FIG. 10, where a shipping address input into the system is carrier-validated, it may be indicated, and it may be available for use for to ship to the shipping address. Where a shipping address input into the system is not carrier-validated, it may not be available for use for shipping. Alternatively a new address may be input for validation to that new shipment address.

According to one embodiment of the disclosed subject matter, a system is provided for enriching a shipping address using a shipping service provider computer system may be provided. The system 100 may include an address database 108. The system may include an interface. The interface may be accessible by a device 102 over a network 104. The interface may be used to input the shipping address. The system 100 may receive the shipping address and/or shipping data related input. The system 100, more particularly, may include a computerized software application platform 106 for receive the shipping address and/or shipping data related input from the user or other sources such as the backend processes of an enterprise resource management (ERP) system. Database 108 may store enriched shipping addresses. The system may include an address validation service (AVS) 110 for validating the validated the shipping address.

AVS 110 may be accessible over network 104 by computerized application platform 106. AVS 110 may include AVS database 112 for storing validated shipping addresses. The system may include one or more carriers 114. Carriers 114 may include a carrier address verification service (AVS). Carriers 114 be accessible over the network 104 by computerized application platform 106 and/or AVS 110. Carriers 114 may carrier-validate pre-validated shipping addresses from computerized application platform 106. Carriers 114 may carrier-validate validated shipping address from AVS 110. Carriers 114 may communicate to the multi-source address management system 100 carrier-validated shipping addresses that may be progressively enriched by each validation step completed by the enrichment method implemented by the system 100

According to an embodiment of the disclosed subject matter, a multi-source address management system 100 is provided where a computer-readable medium may store a plurality of instructions which, when executed by a processor, may perform a method for enriching a shipping address using the system 100. The system 100 may include a computerized application platform 106, an interface and a database 108. The method may include the platform 106 receiving the shipping address through the interface over a network 104. The method may include an address validation service (AVS) 110 for validating the shipping address. The AVS 110 may be accessible over the computer network 104. The method may include the AVS 110 receiving the shipping address from the computerized platform 106. The AVS 110 may include a database 112. The method may include the AVS 110 communicating a request over the network 104 to one or more carriers 114 to at least validate the validated shipping address. The method may include the one or more carriers 114 communicating over the network 104 to database 108 one or more carrier-validated shipping addresses, wherein each of the carrier-validated address is progressively enriched through each validation step.

According to an embodiment of the disclosed subject matter, a method is provided for enriching a shipping address in a multi-source address management system. The system may include an interface and an address database 108. The method may include receiving the shipping address through the interface. The method may include validating the shipping address using an address validation service (AVS) 110. The method may include requesting one or more carriers 114 to validate the validated shipping address. Carriers 114 may include a carrier address verification service (AVS). The method may include receiving one or more carrier-validated shipping addresses, wherein each carrier-validated shipping address is progressively enriched through each validation step.

According to an embodiment of the disclosed subject matter, a method is provided for enriching a shipping address in a multi-source address management system 100. The system 100 may include an interface and an address database 108. The method may include receiving the shipping address through the interface. The method may include requesting one or more carriers 114 to validate the validated shipping address. Carriers 114 may include a carrier address verification service (AVS). The method may include receiving from the carriers 114 one or more carrier-validated shipping addresses, wherein each carrier-validated shipping address is progressively enriched through each validation step.

According to an embodiment of the disclosed subject matter, a method is provided for enriching a shipping address in a multi-source address management system 100. The system 100 may include an interface and an address database 108. The method may include receiving the shipping address through the interface. The method may include validating the shipping address using an address validation service (AVS) 110. The method may include requesting one or more carriers to carrier-validate the validated shipping address. Carriers 114 may include a carrier address verification service (AVS). The method may include receiving one or more carrier-validated shipping addresses. The method may include saving the one or more carrier-validated shipping addresses. The method may include storing the one or more carrier-validated shipping addresses. The method may include displaying the one or more carrier-validated shipping addresses. According to the method, each carrier-validated shipping address is progressively enriched through each validation step.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

## Claims

1. A method for enriching a shipping address in a multi-source address management system, the system including an interface and an address database, the method comprising:
- receiving the shipping address through the interface;
- sending the shipping address to an address validation service (AVS) for validation;
- receiving a response from the AVS indicating that the shipping address is valid;
- requesting at least one carrier to at least validate the shipping address; and
- receiving a response from the at least one carrier indicating that the address is valid, wherein the shipping address is progressively enriched through each validation step.

2. The method for enriching a shipping address of claim 1, further comprising pre-processing the shipping address upon input into the interface, wherein pre-processing includes at least one of field validation and form validation.

3. The method for enriching a shipping address of claim 1, further comprising pre-validating the shipping address before validation by the AVS, wherein pre- validating includes querying the address database to determine whether an address record corresponding to the shipping address is stored in the address database.

4. The method for enriching a shipping address of claim 1, further comprising pre-validating the shipping address before validation by the AVS, wherein pre- validating includes:
- querying the address record for an address validation timestamp; and
- determining that the address validation timestamp is current.

5. The method for enriching a shipping address of claim 1, further comprising:
- querying the address database to determine whether an address record corresponding to the shipping address is stored in the address database; and
- creating a new address record where no address record corresponding to the shipping address is located in the address database.

6. The method for enriching a shipping address of claim 5, wherein the at least one of the shipping address and the new address record are communicated to the AVS.

7. The method for enriching a shipping address of claim 4 or claim 6, further comprising revalidating the address record where the timestamp is not current.

8. The method for enriching a shipping address of claim 1, wherein the response from the at least one carrier comprises an information flag identifying whether a shipping address is verified, validated, shippable or a combination thereof.

9. The method for enriching a shipping address of claim 8, wherein the information flag status is determined using information from at least one of a carrier validation file, a carrier invoice file and a carrier tracking file.

10. The method for enriching a shipping address of claim 8, wherein a true valid flag is added to the shipping address where the shipping address is verified, validated and shippable; and wherein a false valid flag is added to the shipping address where the shipping address is at least one of: not verified, not validated and not shippable.

11. The method for enriching a shipping address of claim 9, wherein the status of an information flag is at least one of updated and changed based upon information derived from at least one of the carrier validation, the carrier invoice and the carrier tracking files; and wherein the shipping address record is updated using information derived from at least one of the carrier validation, the carrier invoice and the carrier tracking files.

12. The method for enriching a shipping address of claim 1, further comprising:
- storing at least the shipping address on the address record after the shipping address is validated by the at least one carrier; and
- displaying the shipping address through the interface subsequent to receiving the response from the at least one carrier.

13. The method for enriching a shipping address of claim 1, further comprising saving, storing and updating the address record with at least the carrier validation of each carrier on at least one of an entry-by-entry and an aggregate basis.

14. A system for enriching a shipping address in a multi-source address management system, the system comprising:
- an interface, accessible by a user device over a network, for inputting the shipping address;
- a computerized software application platform for receive the shipping address from the interface, the software application platform including a database for at least storing the shipping addresses;
- an address validation service (AVS) for validating the shipping address, accessible over the network by the computerized application platform, the AVS including an AVS database for at least storing validated shipping addresses; and
- at least one carrier, accessible over the network, the carrier including a carrier address validation service, the carrier for receiving and at least carrier validating the validated shipping address using the carrier address validation service and communicating to the database at least a carrier validated shipping address, wherein the shipping address is progressively enriched through each validation step.

15. A computer-readable medium storing a plurality of instructions which, when executed by a processor, perform a method for enriching a shipping address in a multi-source address management system, the system including an interface and an address database, the method comprising:
- receiving, through the interface over a network, the shipping address;
- validating, by an address validation service (AVS), the shipping address;
- requesting, by the AVS, at least one carrier to at least validate the validated shipping address, the carrier including a carrier validation service for carrier-validating the shipping address; and
- receiving, by the system, over the network, from the carrier, at least the carrier-validated shipping address, wherein the carrier-validated shipping address is progressively enriched through each validation step.
